# EUROPÄISCHE PATENTANMELDUNG

(11) **EP 3 636 910 A1**
(43) Veröffentlichungstag der Anmeldung: **15.04.2020**
(21) Anmeldenummer: 18199143.1
(22) Anmeldetag: 08.10.2018
(51) Int. Cl.: F02M 43/00, F02M 25/00, F02M 25/10, F02D 19/06, F02D 41/00, C10L 1/19, C10L 10/00, F02D 19/12

(54) **VERWENDUNG EINES AMEISENSÄUREALKYLESTERS UND/ODER EINES OXYMETHYLENDIMETHYLETHERS ODER POLYOXYMETHYLENDIMETHYLETHERS**

(71) Anmelder: OxFA GmbH, 96110 Scheßlitz (DE); Friedrich-Alexander-Universität Erlangen-Nürnberg, 91054 Erlangen (DE)
(72) Erfinder: JBACH, Hermann Wolf, 96120 Bischberg (DE); BÖSMANN, Andreas, 91093 Heßdorf (DE); SCHMIDT, Matthias, DE/ 91362 Pretzfeld (DE); KOHLER, Florian, 90419 Nürnberg (DE); SCHOLZ, Gunthard, 96163 Gundelsheim (DE)
(74) Vertreter: Dr. Gassner & Partner mbB

(57) **Zusammenfassung**

Die Erfindung betrifft die Verwendung mindestens eines Ameisensäurealkylesters der Formel HCO-O-R, wobei R ein 1 bis 6 Kohlenstoffatome aufweisender Alkylrest oder ein 6 Kohlenstoffatome aufweisender Arylrest ist, und/oder mindestens eines Oxymethylendimethylethers oder Polyoxymethylendimethylethers (OME) der Formel H₃C-O-(CH₂O)ₙ-CH₃, wobei 1 ≤ n ≤ 5 ist, als Zusatz zum Treibstoff für einen Verbrennungsmotor oder als zusätzlich zum Treibstoff in einen Verbrennungsraum eines Verbrennungsmotors einzuspritzende Komponente zur Verminderung einer NOₓ-Emission beim Betrieb des Verbrennungsmotors gegenüber dessen Betrieb nur mit dem Treibstoff, wobei beim Betrieb des Verbrennungsmotors eine Rückführung eines Teils eines beim Betrieb des Verbrennungsmotors entstehenden Abgases in einen/den Verbrennungsraum des Verbrennungsmotors erfolgt.

## Beschreibung

Die Erfindung betrifft die Verwendung mindestens eines Ameisensäurealkylesters der Formel HCO-O-R, wobei R ein 1 bis 6 Kohlenstoffatome aufweisender Alkylrest oder ein 6 Kohlenstoffatome aufweisender Arylrest ist und/oder mindestens eines Oxymethylendimethylethers oder Polyoxymethylendimethylethers (OME) der Formel H₃C-O-(CH₂O)ₙ-CH₃, wobei 1 ≤ n ≤ 5 ist als Zusatz zum Treibstoff für einen Verbrennungsmotor oder als zusätzlich zum Treibstoff in einen Verbrennungsraum eines Verbrennungsmotors einzuspritzende Komponente zur Verminderung einer NOₓ-Emission beim Betrieb des Verbrennungsmotors gegenüber dessen Betrieb nur mit dem Treibstoff. Weiterhin betrifft die Erfindung einen zur erfindungsgemäßen Verwendung ausgelegten Verbrennungsmotor.

Aus der DE 43 44 222 A1 sind Otto-Kraftstoffe bekannt, die Ester von Hydrocarbonsäuren zur Verbesserung der Oktanzahl enthalten.

Die EP 0 501 097 B1 offenbart die Verwendung von Methylformiat als Oktanzahlerhöhendem Zusatz zu einem Treibstoff für Verbrennungsmotoren mit elektrischer Zündung.

Aus der MTZ - Motortechnische Zeitschrift, Ausgabe 7-8/2018, Seiten 16-23 sind Oxymethylenether als Kraftstoffzusätze zu Dieselkraftstoff bekannt. Bei Untersuchungen an einem Euro-6b-Motor wurde festgestellt, dass die NOₓ-Emissionen bei Oxymethylenether-Beimischungen von 15 % und 30 % zum Kraftstoff zunehmen.

Aufgabe der vorliegenden Erfindung ist es, eine Verwendung zur Reduktion der NOₓ-Emission eines Verbrennungsmotors bei dessen Betrieb anzugeben. Weiterhin soll ein für diese Verwendung ausgelegter Verbrennungsmotor angegeben werden.

Die Aufgabe wird durch die Merkmale der Patentansprüche 1 und 10 gelöst. Zweckmäßige Ausgestaltungen ergeben sich aus den Merkmalen der Patentansprüche 2 bis 9 und 11 bis 15.

Erfindungsgemäß ist die Verwendung mindestens eines Ameisensäurealkylesters der Formel HCO-O-R, wobei R ein 1 bis 6 Kohlenstoffatome aufweisender Alkylrest oder ein 6 Kohlenstoffatome aufweisender Arylrest ist, und/oder die Verwendung mindestens eines Oxymethylendimethylethers oder Polyoxymethylendimethylethers (OME) der Formel H₃C-O-(CH₂O)ₙ-CH₃, wobei 1 ≤ n ≤ 5 ist, als Zusatz zum Treibstoff für einen Verbrennungsmotor oder als zusätzlich zum Treibstoff in einen Verbrennungsraum eines Verbrennungsmotors einzuspritzende Komponente vorgesehen. Der Zusatz ist dabei entweder in dem Treibstoff gelöst oder homogen darin suspendiert. Die genannte Verwendung dient der Verminderung einer NOₓ-Emission beim Betrieb des Verbrennungsmotors gegenüber dessen Betrieb nur mit dem Treibstoff. Der "Betrieb nur mit dem Treibstoff' ist ein Betrieb des Verbrennungsmotors mit dem Treibstoff ohne den Zusatz und ohne die Komponente. Beim Betrieb des Verbrennungsmotors erfolgt eine Rückführung eines Teils eines beim Betrieb des Verbrennungsmotors entstehenden Abgases in einen/den Verbrennungsraum des Verbrennungsmotors. Der Verbrennungsmotor ist dazu mit einer Abgasrückführungseinrichtung ausgestattet. Der genannte Verbrennungsraum kann jeder Verbrennungsraum des Verbrennungsmotors sein. Insbesondere umfasst der Verbrennungsraum im Sinne der Erfindung jeden Verbrennungsraum des Verbrennungsmotors.

Die Abgasrückführungseinrichtung kann eine herkömmliche, aus dem Stand der Technik bekannte Abgasrückführungseinrichtung sein. Erfindungsgemäß wird eine Menge von dem Verbrennungsraum des Verbrennungsmotors pro Verbrennungsprozess zugeführter Luft umso mehr reduziert wird, je höher der Sauerstoffgehalt des Abgases ist. Die Menge von dem Verbrennungsmotor zur Verbrennung des Treibstoffs zugeführter Luft wird also in Abhängigkeit vom, insbesondere permanent gemessenen, Sauerstoffgehalt des Abgases, insbesondere permanent, so geregelt, dass die Menge zugeführter Luft umso mehr reduziert wird, je höher der Sauerstoffgehalt des Abgases ist. Zumindest ein Teil oder die gesamte Menge des Sauerstoffs, der in der Luftmenge enthalten ist, um die die Menge zugeführter Luft reduziert wird, wird durch den im Abgas enthaltenen Sauerstoff ersetzt. Es ist möglich, nur einen Teil dieses Sauerstoffs zu ersetzen, weil der Zusatz bzw. die zusätzlich zum Treibstoff in den Verbrennungsraum des Verbrennungsmotors einzuspritzende Komponente selbst Sauerstoff in den Verbrennungsprozess im Verbrennungsraum des Verbrennungsmotors einbringt. Die Menge von dem Verbrennungsraum des Verbrennungsmotors pro Verbrennungsprozess zugeführter Luft ist erfindungsgemäß diejenige Menge Luft, die für eine vollständige Verbrennung des dem Verbrennungsraum zugeführten Treibstoffs erforderlich ist. Beim Dieselmotor ist die Menge von dem Verbrennungsraum des Verbrennungsmotors pro Verbrennungsprozess zugeführter Luft daher nicht die üblicherweise beim Dieselmotor überschüssig vorliegende Menge Luft, sondern die auf die für die vollständige Verbrennung des Treibstoffs erforderliche Luftmenge reduzierte Menge. Erfindungsgemäß wird diese reduzierte Menge Luft weiter in Abhängigkeit vom Sauerstoffgehalt des Abgases reduziert.

Eine Messung des Sauerstoffgehalt des Abgases kann mittels einer herkömmlichen Sauerstoffsonde erfolgen. Wenn keine gesonderte Sonde dafür vorgesehen werden soll, kann der Sauerstoffgehalt auch mittels einer vorhandenen Lambdasonde gemessen werden. Die Messung des Sauerstoffgehalts des Abgases kann permanent, in Zeitintervallen oder, insbesondere bei verhältnismäßig konstant betriebenen Motoren, wie z. B. Stationärmotoren zur Stromerzeugung, auch nur einmalig als Einzelmessung oder als Messung einer Reihe von Werten bei unterschiedlicher Drehzahl und/oder unterschiedlicher Last erfolgen. Für eine einmalige Messung kann ein Messgerät mit einer Sonde verwendet werden. Das Messgerät muss dabei nicht Bestandteil einer Motorsteuerung des Verbrennungsmotors sein. Der ermittelte Messwert oder die ermittelten Messwerte werden in diesem Fall verwendet, um den Wert oder die Werte der Reduktion der Menge von dem Verbrennungsraum des Verbrennungsmotors pro Verbrennungsprozess zugeführter Luft zu ermitteln, einzustellen und/oder in der Motorsteuerung zu hinterlegen. Der/die Wert(e) kann/können dabei ein konstanter Wert/konstante Werte sein. Es ist auch möglich, dass von der Drehzahl oder der Last des Motors neben dem Sauerstoffgehalt des Abgases abhängige Werte in der Motorsteuerung hinterlegt werden.

Gemäß der oben genannten Veröffentlichung MTZ - Motortechnische Zeitschrift, Ausgabe 7-8/2018, Seiten 16 bis 23 führt der Zusatz von Oxymethylenether zum Treibstoff eines Dieselmotors grundsätzlich zur Erhöhung der NOₓ-Emission des Dieselmotors. Die Erfinder haben bei Versuchen mit Verbrennungsmotoren jedoch festgestellt, dass der oben genannte Zusatz zum Treibstoff bzw. die oben genannte in den Verbrennungsraum eingespritzte Komponente den Sauerstoffanteil im Abgas deutlich erhöht. Der im Abgas enthaltene Sauerstoff kann bei Rückführung eines Teils des Abgases einen Teil des Luftsauerstoffs ersetzen. Dadurch ist es möglich, ohne eine Leistungseinschränkung die Menge der dem Verbrennungsmotor zur Verbrennung des Treibstoffs zugeführten Luft zu reduzieren. Da der Luftsauerstoff stets zusammen mit dem in der Luft enthaltenen Stickstoff der Verbrennung zugeführt wird, wird die NOₓ-Emission des Verbrennungsmotors durch die Reduzierung des der Verbrennung zugeführten Luftsauerstoffs vermindert. Die Reduktion der NOₓ-Emission erfolgt hier also durch die spezielle Kombination des Zusatzes bzw. der Komponente mit der Steuerung der Luftzufuhr zum Verbrennungsmotor in Abhängigkeit vom Sauerstoffgehalt des rückgeführten Abgases.

Durch eine entsprechende Steuerung der Abgasrückführungseinrichtung kann eine Menge des dem Verbrennungsraum des Verbrennungsmotors pro Verbrennungsprozess zurückgeführten Abgases umso mehr erhöht werden, je höher der Sauerstoffgehalt des Abgases ist. Dadurch kann die NOₓ-Emission weiter reduziert werden. Auch der Wert oder die Werte der Menge des dem Verbrennungsraum des Verbrennungsmotors pro Verbrennungsprozess zurückgeführten Abgases kann in Abhängigkeit von permanent, in Zeitintervallen oder auch nur einmalig als Einzelmessung oder als Messung einer Reihe von Werten bei unterschiedlicher Drehzahl und/oder unterschiedlicher Last gemessenem Sauerstoffgehalt des Abgases ermittelt, eingestellt und/oder in der Motorsteuerung hinterlegt werden. Der/die Wert(e) kann/können dabei ein konstanter Wert/konstante Werte sein. Es ist auch möglich, dass von der Drehzahl oder der Last des Motors neben dem Sauerstoffgehalt des Abgases abhängige Werte in der Motorsteuerung hinterlegt werden.

Bei einer Ausgestaltung der Erfindung wird der Sauerstoffgehalt des Abgases bei einem Betrieb des Verbrennungsmotors unter verschiedenen Betriebsbedingungen zu Messzwecken, beispielsweise in einem Motormesstand, gemessen und die resultierend Menge von dem Verbrennungsraum des Verbrennungsmotors pro Verbrennungsprozess zugeführter Luft und optional die resultierende Menge des dem Verbrennungsraum des Verbrennungsmotors pro Verbrennungsprozess zurückgeführten Abgases zusammen mit Betriebsbedingungen des Motors bei diesem Betrieb, wie z. B. Drehzahl des Motors und vom Motor erbrachte Leistung, gespeichert. Bei einem späteren Betrieb des Motors bei diesen Betriebsbedingungen wird dann die Menge der dem Verbrennungsraum des Verbrennungsmotors pro Verbrennungsprozess zugeführter Luft und optional die Menge des dem Verbrennungsraum des Verbrennungsmotors pro Verbrennungsprozess zurückgeführten Abgases durch den/die für diese Betriebsbedingungen gespeicherten Wert/Werte bestimmt. Die Werte und die zugehörigen Betriebsbedingungen können dazu in der Motorsteuerung des Motors, beispielsweise in Form eines Kennfelds oder in einem vorhandenen Kennfeld, gespeichert sein.

Versuchsergebnisse zeigten außerdem, dass durch die Verwendung des Ameisensäurealkylesters als Zusatz zum Treibstoff für einen Verbrennungsmotor oder als zusätzlich zum Treibstoff in einen Verbrennungsraum eines Verbrennungsmotors einzuspritzende Komponente der Ausstoß des Verbrennungsmotors an NOₓ, unverbrannten organischen Anteilen und an Partikeln beim Betrieb des Verbrennungsmotors gegenüber dessen Betrieb nur mit dem Treibstoff deutlich vermindert ist, selbst wenn beim Betrieb des Verbrennungsmotors keine Abgasrückführung erfolgt.

Bei dem Verbrennungsmotor kann es sich um einen Ottomotor oder einen Dieselmotor handeln. Bei einer Ausgestaltung des erfindungsgemäßen Verfahrens weist der Ameisensäurealkylester die Formel HCO-O-(CH₂)ₙ-CH₃ auf, wobei 0 ≤ n ≤ 5 ist.

Normalerweise wird bei bisherigen Abgasrückführungseinrichtungen bei einem Vollastbetrieb des Verbrennungsmotors kein Abgas in den Verbrennungsraum des Verbrennungsmotors eingeführt. Abweichend von dem bisher üblichen Motormanagement und bedingt durch den höheren Sauerstoffanteil des Abgases kann die Abgasrückführung erfindungsgemäß auch beim Vollastbetrieb des Verbrennungsmotors erfolgen und dabei die NOₓ-Emission reduzieren. Insbesondere kann die Abgasrückführung nach Abschluss eines Startvorgangs des Verbrennungsmotors, bei dem üblicherweise keine Abgasrückführung erfolgt, bei jedem Betriebszustand des Verbrennungsmotors erfolgen und so in jedem Betriebszustand die NOₓ-Emission reduzieren. Betriebszustände des Verbrennungsmotors sind der Leerlauf, jeder mögliche Teillastbetrieb und der Vollastbetrieb. Der Vollastbetrieb kann dabei ein Betrieb bei maximaler Drehzahl oder ein Betrieb bei demgegenüber verminderter Drehzahl aber maximaler Leistung, beispielsweise bei einer Bergauffahrt eines von dem Verbrennungsmotor angetriebenen Kraftfahrzeugs, sein.

Der Zusatz kann mit einem Volumenanteil von 1 - 99 Vol.-%, insbesondere 5 - 60 Vol.-%, insbesondere 7,5 - 40 Vol.-%, insbesondere 10 - 35 Vol.-%, insbesondere 15 - 35 Vol.-%, in dem Treibstoff mit dem darin enthaltenen Zusatz, d. h. in der Gesamtmenge des mit dem Zusatz vermischten Treibstoffs, enthalten sein. Ein Volumenanteil von 10-35 Vol.-% an dem Treibstoff hat sich als besonders praktikabel für eine Versorgung mit dem den Zusatz enthaltenden Treibstoff mit der bisherigen Infrastruktur der Treibstoffversorgung ohne größere Änderungen daran erwiesen.

Wenn als erfindungsgemäße Verwendung die Verwendung des Ameisensäurealkylesters erfolgt, kann der Alkylrest 1 bis 5 Kohlenstoffatome, insbesondere 1 bis 4 Kohlenstoffatome, insbesondere 1 bis 3 Kohlenstoffatome, insbesondere 1 oder 2 Kohlenstoffatome, aufweisen. Bei dem Ameisensäurealkylester kann es sich insbesondere um Ameisensäurebutylester, Ameisensäureethylester oder Ameisensäuremethylester handeln.

Der Treibstoff mit dem darin enthaltenen Zusatz oder die in den Verbrennungsraum des Verbrennungsmotors einzuspritzende Komponente kann vor dessen/deren Verbrennung im Verbrennungsraum des Verbrennungsmotors mit einem festen basischen Säurefänger in Kontakt gebracht werden, wobei der Zusatz oder die Komponente der Ameisensäurealkylesters ist. Dadurch wird durch Hydrolyse aus dem Ameisensäurealkylester entstehende Ameisensäure abgefangen, d. h. insbesondere neutralisiert oder gebunden. Dadurch kann vermieden werden, dass die Ameisensäure Schäden an Teilen des Kraftstoffsystems oder des Verbrennungsmotors bewirkt.

Bei dem Säurefänger kann es sich um ein Alkali- oder Erdalkalicarbonat, insbesondere Calciumcarbonat, ein Erdalkalihydroxid, insbesondere Magnesiumhydroxid, oder ein polymeres Amin, insbesondere ein aminsubstituiertes Polystyrol, handeln.

Die Erfindung betrifft trifft weiterhin einen Verbrennungsmotor, der zur erfindungsgemäßen Verwendung ausgelegt ist und dazu mit einer Abgasrückführungseinrichtung (ARE) und einem Motorsteuergerät ausgestattet ist. Der Betrieb des Verbrennungsmotors ist dabei durch das Motorsteuergerät so gesteuert, dass dabei eine Rückführung eines Teils des Abgases in einen Verbrennungsraum des Verbrennungsmotors erfolgt, wobei eine Menge von dem Verbrennungsraum des Verbrennungsmotors pro Verbrennungsprozess zugeführter Luft umso mehr reduziert wird, je höher ein Sauerstoffgehalt des beim Betrieb des Verbrennungsmotors entstehenden Abgases ist. Der erfindungsgemäße Verbrennungsmotor kann dabei in ein Kraftfahrzeug eingebaut sein.

Der Verbrennungsmotor kann eine Einrichtung zum Einspritzen des Ameisensäurealkylesters und/oder des Oxymethylendimethylethers oder Polyoxymethylendimethylethers als Komponente zusätzlich zum Treibstoff in den Verbrennungsraum aufweisen.

Bei einer Ausgestaltung des erfindungsgemäßen Verbrennungsmotors ist der Betrieb des Verbrennungsmotors weiterhin so gesteuert, dass eine Menge des dem Verbrennungsraum des Verbrennungsmotors pro Verbrennungsprozess zurückgeführten Abgases umso mehr erhöht wird, je höher der Sauerstoffgehalt des Abgases ist

Bei dem Verbrennungsmotor kann es sich um einen Ottomotor oder einen Dieselmotor handeln.

Der Verbrennungsmotor kann mit einer Einrichtung zum Messen des Sauerstoffgehaltes des beim Betrieb des Verbrennungsmotors entstehenden Abgases ausgestattet sein, welche beim Betrieb des Verbrennungsmotors den Sauerstoffgehalt des Abgases misst.

Der Betrieb des Verbrennungsmotors kann weiterhin so gesteuert sein, dass die Abgasrückführung, insbesondere auch, beim Vollastbetrieb des Verbrennungsmotors erfolgt. Der Betrieb des Verbrennungsmotors kann weiterhin so gesteuert sein, dass die Abgasrückführung nach Abschluss eines Startvorgangs des Verbrennungsmotors bei jedem Betriebszustand des Verbrennungsmotors erfolgt.

Nachfolgend wird die Erfindung anhand eines Ausführungsbeispiels näher erläutert.

In einer ersten Versuchsreihe wurden die Versuchsträger 1 und 2 als Motoren ohne Abgasrückführungseinrichtung (ARE) und in einer zweiten Versuchsreihe die Versuchsträger 3 und 4 als Motoren mit ARE eingesetzt. An keinem der Versuchsträger wurden Anpassungen am System der Kraftstoffversorgung vorgenommen. Als Kraftstoff wurde bei den Versuchsträgern 1 und 3 handelsübliches E5-Benzin (E5) und bei den Versuchsträgern 2 und 4 handelsüblicher Dieselkraftstoff (B7) eingesetzt. Neben dem jeweiligen Kraftstoff ohne Zusatz wurde der jeweilige Kraftstoff mit Zusatz von jeweils 5, 10 und 20 Vol.-% Methylformiat (= Ameisensäuremethylester) getestet. Zur Detektion der Abgaskomponenten wurden jeweils ein paramagnetischer Sauerstoffsensor der Firma M&C TechGroup Germany GmbH, Rehhecke 79, 40885 Ratingen, ein Thermo-Flammenionisationsdetektor zur Detektion unverbrannter organische Komponenten und der Partikeldetektor Pegasor der Firma MS4-Analysentechnik GmbH, Am Sandberg 20, D-35519 Rockenberg verwendet.

### Erste Versuchsreihe:

### Versuchsträger 1:

Ottomotor in einem Stromerzeuger der Marke Parkside, Vergaser, 1-Zylinder, 207 cm³ Hubraum.

### Versuchsträger 2:

Dieselmotor der Marke Kubota, Typ D1105E, mit mechanischer Reiheneinspritzung, 3-Zylinder, 1123 cm³ Hubraum.

### Versuche mit Versuchsträger 1:

Mit dem Versuchsträger 1 wurden die Lastpunkte 0,5, 1 und 1,5 kW angefahren. Bei Betrieb des Versuchsträgers 1 mit dem Kraftstoff mit Zusatz von Methylformiat wurden im Abgas gegenüber dem Betrieb mit dem Kraftstoff ohne den Zusatz erhöhte Sauerstoffwerte gemessen. Die Erhöhung ist besonders ausgeprägt bei geringen Lasten. Bei einer hohen Last von 1,5 kW steigt der Restsauerstoffgehalt um 35 % beim Betrieb mit dem Kraftstoff mit 20 Vol.-% Methylformiatzusatz gegenüber dem Betrieb mit E5-Benzin ohne Zusatz. Die Messergebnisse sind wie folgt:

| Restsauerstoff [%] | | | | |
|---|---|---|---|---|
| Leistung [kW] | E5 | 5% Methylformiat | 10% Methylformiat | 20% Methylformiat |
| 0,5 | 2,38 | 2,47 | 2,83 | 5,42 |
| 1 | 2,77 | 2,68 | 2,86 | 4,97 |
| 1,5 | 2,29 | 2,39 | 2,65 | 3,19 |

| FID [ppm] | | | | |
|---|---|---|---|---|
| Leistung [kW] | E5 | 5% Methylformiat | 10% Methylformiat | 20% Methylformiat |
| 0,5 | 3000 | 2619 | 1396 | 412 |
| 1 | 3000 | 2648 | 1553 | 518 |
| 1,5 | 3000 | 2848 | 2415 | 1598 |

Die obigen Ergebnisse zeigen, dass der Ausstoß an unverbrannten organischen Anteilen beim Betrieb des Versuchsträgers 1 mit Kraftstoff mit Zusatz von Methylformiat gegenüber dem Betrieb mit dem Kraftstoff ohne Zusatz deutlich vermindert ist.

| Partikel [mg/m³] | | | | |
|---|---|---|---|---|
| Leistung [kW] | E5 | 5% Methylformiat | 10% Methylformiat | 20% Methylformiat |
| 0,5 | 0,22 | 0,08 | 0,05 | 0,01 |
| 1 | 0,17 | 0,1 | 0,02 | 0,03 |
| 1,5 | 0,15 | 0,15 | 0,04 | 0,04 |

Die obigen Ergebnisse zeigen, dass die Konzentration an Partikeln im Abgas beim Betrieb des Versuchsträgers 1 mit Kraftstoff mit Zusatz von Methylformiat gegenüber dem Betrieb mit dem Kraftstoff ohne Zusatz deutlich vermindert ist.

### Versuche mit Versuchsträger 2:

Mit dem Versuchsträger 2 wurden die Lastpunkte 1,2, 3, 4,8 und 5,7 kW angefahren. Bei Betrieb des Versuchsträgers 2 mit dem Kraftstoff mit Zusatz von Methylformiat wurden im Abgas gegenüber dem Betrieb mit dem Kraftstoff ohne den Zusatz erhöhte Sauerstoffwerte gemessen. Besonders ausgeprägt ist der Anstieg im Sauerstoffgehalt des Abgases bei Volllast; Dabei tritt eine Erhöhung des Restsauerstoffgehaltes im Abgas um 70 % beim Betrieb mit dem Kraftstoff mit 20 Vol.-% Methylformiatzusatz gegenüber dem Betrieb mit Diesel ohne Zusatz ein.

Die Messergebnisse sind wie folgt:

| Restsauerstoff [%] | | | | | |
|---|---|---|---|---|---|
| Leistung [kW] | B7 | 5% Methylformiat | 10% Methylformiat | 15% Methylformiat | 20% Methylformiat |
| 1,2 | 15,33 | 15,47 | 15,47 | 15,46 | 16,46 |
| 3 | 13,07 | 13,31 | 13,33 | 14 | 15,17 |
| 4,8 | 10,44 | 10,72 | 10,85 | 14,52 | 15,31 |
| 5,7 | 8,92 | 9,24 | 9,54 | 14,64 | 15,19 |

| Partikel [mg/m³] | | | | | |
|---|---|---|---|---|---|
| Leistung [kW] | B7 | 5% Methylformiat | 10% Methylformiat | 15% Methylformiat | 20% Methylformiat |
| 1,2 | 2,2 | 1,6 | 1,8 | 2,5 | 2 |
| 3 | 4,2 | 2,2 | 3,2 | 3,3 | 2,5 |
| 4,8 | 5,2 | 5,6 | 4,5 | 5,5 | 5,2 |
| 5,7 | 7,2 | 7 | 6,2 | 7,2 | 6,1 |

Die obigen Ergebnisse zeigen, dass die Konzentration an Partikeln im Abgas beim Betrieb des Versuchsträgers 2 mit Kraftstoff mit Zusatz von Methylformiat gegenüber dem Betrieb mit dem Kraftstoff ohne Zusatz vermindert ist.

| NOx [ppm] | | | | | |
|---|---|---|---|---|---|
| Leistung [kW] | B7 | 5% Methylformiat | 10% Methylformiat | 15% Methylformiat | 20% Methylformiat |
| 1,2 | 270 | 262 | 239 | 231 | 217 |
| 3 | 458 | 440 | 409 | 397 | 367 |
| 4,8 | 589 | 503 | 485 | 433 | 405 |
| 5,7 | 611 | 583 | 495 | 463 | 405 |

Die obigen Ergebnisse zeigen, dass die Stickoxidemissionen bei allen Lastpunkten beim Betrieb des Versuchsträgers 2 mit Kraftstoff mit Zusatz von Methylformiat gegenüber dem Betrieb mit dem Kraftstoff ohne Zusatz sinken. Dies ist bei hohen Lastpunkten besonders ausgeprägt.

### Zweite Versuchsreihe:

### Versuchsträger 3:

Ottomotor mit Abgasrückführung und reduzierter Luftzufuhr gemäß dem erfindungsgemäßen Verfahren. Die Menge von dem Motor zugeführter Luft und die Menge des rückgeführten Abgases werden über den Sauerstoffgehalt des Abgases so gesteuert, dass im Abgas ein Sauerstoffgehalt von 2,5 Vol.-% lastpunktabhängig erreicht wird.

### Versuchsträger 4:

Dieselmotor mit Abgasrückführung und reduzierter Luftzufuhr gemäß dem erfindungsgemäßen Verfahren. Die Menge von dem Motor zugeführter Luft und die Menge des rückgeführten Abgases werden über den Sauerstoffgehalt des Abgases so gesteuert, dass im Abgas ein Sauerstoffgehalt von 7 - 15 Vol.-% lastpunktabhängig erreicht wird, wobei bei hoher Last ein Wert von 7 Vol.-% Sauerstoff angestrebt wird. Dabei werden 20 bis 40 Vol.-% des Abgases zurückgeführt, wobei umso mehr Abgas rückgeführt und die Menge der dem Motor zugeführter Luft umso mehr gedrosselt wird, je höher der gemessen Sauerstoffgehalt des Abgases ist.

### Versuche mit Versuchsträger 3:

Mit dem Versuchsträger 3 wurden die Lastpunkte 0,5, 1 und 1,5 kW angefahren.

Die Messergebnisse sind wie folgt:

| FID [ppm] | | | | |
|---|---|---|---|---|
| Leistung [kW] | E5 | 5% Methylformiat | 10% Methylformiat | 20% Methylformiat |
| 0,5 | 3000 | 653 | 349 | 87 |
| 1 | 3000 | 668 | 442 | 92 |
| 1,5 | 3000 | 683 | 481 | 264 |

Die obigen Ergebnisse zeigen, dass der Ausstoß an unverbrannten organischen Anteilen beim Betrieb des Versuchsträgers 3 mit Abgasrückführung und Kraftstoff mit Zusatz von Methylformiat gegenüber dem Betrieb mit dem Kraftstoff ohne Zusatz deutlich vermindert ist.

| Partikel [mg/m³] | | | | |
|---|---|---|---|---|
| Leistung [kW] | E5 | 5% Methylformiat | 10% Methylformiat | 20% Methylformiat |
| 0,5 | 0,18 | 0,02 | 0,01 | <0,01 |
| 1 | 0,14 | 0,03 | 0,01 | 0,01 |
| 1,5 | 0,13 | 0,07 | 0,02 | 0,01 |

Die obigen Ergebnisse zeigen, dass die Konzentration an Partikeln im Abgas beim Betrieb des Versuchsträgers 3 mit Abgasrückführung und Kraftstoff mit Zusatz von Methylformiat gegenüber dem Betrieb mit dem Kraftstoff ohne Zusatz deutlich vermindert ist.

### Versuche mit Versuchsträger 4:

Mit dem Versuchsträger 4 wurden die Lastpunkte 1,2, 3, 4,8 und 5,7 kW angefahren. Die Messergebnisse sind wie folgt:

| Partikel [mg/m³] | | | | | |
|---|---|---|---|---|---|
| Leistung [kW] | B7 | 5% Methylformiat | 10% Methylformiat | 15% Methylformiat | 20% Methylformiat |
| 1,2 | 1,9 | 1,2 | 1,3 | 1,5 | 1,6 |
| 3 | 3,7 | 2,2 | 1,6 | 1,7 | 1,8 |
| 4,8 | 4,8 | 3,2 | 2,8 | 2,0 | 2,1 |
| 5,7 | 6,7 | 5,8 | 3,1 | 2,1 | 2,3 |

Die obigen Ergebnisse zeigen, dass die Konzentration an Partikeln im Abgas beim Betrieb des Versuchsträgers 4 mit Abgasrückführung und Kraftstoff mit Zusatz von Methylformiat gegenüber dem Betrieb mit dem Kraftstoff ohne Zusatz deutlich vermindert ist.

| NOx [ppm] | | | | | |
|---|---|---|---|---|---|
| Leistung [kW] | B7 | 5% Methylformiat | 10% Methylformiat | 15% Methylformiat | 20% Methylformiat |
| 1,2 | 28 | 8 | 6 | 5 | 5 |
| 3 | 44 | 13 | 11 | 9 | 8 |
| 4,8 | 56 | 22 | 15 | 11 | 8 |
| 5,7 | 63 | 25 | 18 | 14 | 9 |

Die obigen Ergebnisse zeigen, dass die Stickoxidemissionen bei allen Lastpunkten beim Betrieb des Versuchsträgers 4 mit Abgasrückführung und Kraftstoff mit Zusatz von Methylformiat gegenüber dem Betrieb mit dem Kraftstoff ohne Zusatz sinken. Dies ist bei hohen Lastpunkten besonders ausgeprägt.

## Patentansprüche

1. Verwendung mindestens eines Ameisensäurealkylesters der Formel HCO-O-R, wobei R ein 1 bis 6 Kohlenstoffatome aufweisender Alkylrest oder ein 6 Kohlenstoffatome aufweisender Arylrest ist, und/oder mindestens eines Oxymethylendimethylethers oder Polyoxymethylendimethylethers (OME) der Formel H₃C-O-(CH₂O)ₙ-CH₃, wobei 1 ≤ n ≤ 5 ist, als Zusatz zum Treibstoff für einen Verbrennungsmotor oder als zusätzlich zum Treibstoff in einen Verbrennungsraum eines Verbrennungsmotors einzuspritzende Komponente zur Verminderung einer NOₓ-Emission beim Betrieb des Verbrennungsmotors gegenüber dessen Betrieb nur mit dem Treibstoff, wobei beim Betrieb des Verbrennungsmotors eine Rückführung eines Teils eines beim Betrieb des Verbrennungsmotors entstehenden Abgases in einen/den Verbrennungsraum des Verbrennungsmotors erfolgt, wobei eine Menge von dem Verbrennungsraum des Verbrennungsmotors pro Verbrennungsprozess zugeführter Luft umso mehr reduziert wird, je höher der Sauerstoffgehalt des Abgases ist.

2. Verwendung nach Anspruch 1, wobei eine Menge des dem Verbrennungsraum des Verbrennungsmotors pro Verbrennungsprozess zurückgeführten Abgases umso mehr erhöht wird, je höher der Sauerstoffgehalt des Abgases ist.

3. Verwendung nach Anspruch 1 oder 2, wobei der Sauerstoffgehalt des Abgases bei einem Betrieb des Verbrennungsmotors unter verschiedenen Betriebsbedingungen zu Messzwecken gemessen und die resultierend Menge von dem Verbrennungsraum des Verbrennungsmotors pro Verbrennungsprozess zugeführter Luft und optional die resultierende Menge des dem Verbrennungsraum des Verbrennungsmotors pro Verbrennungsprozess zurückgeführten Abgases zusammen mit Betriebsbedingungen des Motors bei diesem Betrieb gespeichert wird, wobei bei einem späteren Betrieb des Motors bei diesen Betriebsbedingungen die Menge der dem Verbrennungsraum des Verbrennungsmotors pro Verbrennungsprozess zugeführter Luft und optional die Menge des dem Verbrennungsraum des Verbrennungsmotors pro Verbrennungsprozess zurückgeführten Abgases durch den/die für diese Betriebsbedingungen gespeicherten Wert/Werte bestimmt wird.

4. Verwendung nach einem der vorhergehenden Ansprüche, wobei die Abgasrückführung beim Vollastbetrieb des Verbrennungsmotors erfolgt.

5. Verwendung nach einem der vorhergehenden Ansprüche, wobei die Abgasrückführung nach Abschluss eines Startvorgangs des Verbrennungsmotors bei jedem Betriebszustand des Verbrennungsmotors erfolgt.

6. Verwendung nach einem der vorhergehenden Ansprüche, wobei der Zusatz mit einem Volumenanteil von 1 - 99 Vol.-%, insbesondere 5 - 60 Vol.-%, insbesondere 10 - 35 Vol.-%, in dem Treibstoff mit dem darin enthaltenen Zusatz enthalten ist.

7. Verwendung nach einem der vorhergehenden Ansprüche, wobei der Ameisensäurealkylester verwendet wird und der Alkylrest 1 bis 5 Kohlenstoffatome, insbesondere 1 bis 4 Kohlenstoffatome, insbesondere 1 bis 3 Kohlenstoffatome, insbesondere 1 oder 2 Kohlenstoffatome, aufweist.

8. Verwendung nach einem der vorhergehenden Ansprüche, wobei der Treibstoff mit dem darin enthaltenen Zusatz oder die in den Verbrennungsraum des Verbrennungsmotors einzuspritzende Komponente vor dessen/deren Verbrennung im Verbrennungsraum des Verbrennungsmotors mit einem festen basischen Säurefänger in Kontakt gebracht wird, wobei der Zusatz oder die Komponente der Ameisensäurealkylesters ist.

9. Verwendung nach Anspruch 8, wobei der Säurefänger ein Alkali- oder Erdalkalicarbonat, insbesondere Calciumcarbonat, ein Erdalkalihydroxid, insbesondere Magnesiumhydroxid, oder ein polymeres Amin, insbesondere ein aminsubstituiertes Polystyrol, ist.

10. Verbrennungsmotor, der zur Verwendung nach einem der vorhergehenden Ansprüche ausgelegt ist und dazu mit einer Abgasrückführungseinrichtung (ARE) und einem Motorsteuergerät ausgestattet ist, wobei ein Betrieb des Verbrennungsmotors durch das Motorsteuergerät so gesteuert ist, dass dabei eine Rückführung eines Teils des Abgases in einen Verbrennungsraum des Verbrennungsmotors erfolgt, wobei eine Menge von dem Verbrennungsraum des Verbrennungsmotors pro Verbrennungsprozess zugeführter Luft umso mehr reduziert wird, je höher ein Sauerstoffgehalt des beim Betrieb des Verbrennungsmotors entstehenden Abgases ist.

11. Verbrennungsmotor nach Anspruch 10, wobei der Verbrennungsmotor eine Einrichtung zum Einspritzen des Ameisensäurealkylesters und/oder des Oxymethylendimethylethers oder Polyoxymethylendimethylethers als Komponente zusätzlich zum Treibstoff in den Verbrennungsraum aufweist.

12. Verbrennungsmotor nach Anspruch 10 oder 11, wobei der Betrieb des Verbrennungsmotors weiterhin so gesteuert ist, dass eine Menge des dem Verbrennungsraum des Verbrennungsmotors pro Verbrennungsprozess zurückgeführten Abgases umso mehr erhöht wird, je höher der Sauerstoffgehalt des Abgases ist.

13. Verbrennungsmotor nach einem der Ansprüche 10 bis 12, wobei der Verbrennungsmotor mit einer Einrichtung zum Messen des Sauerstoffgehaltes des beim Betrieb des Verbrennungsmotors entstehenden Abgases ausgestattet ist.

14. Verbrennungsmotor nach einem der Ansprüche 10 bis 13, wobei der Betrieb des Verbrennungsmotors weiterhin so gesteuert ist, dass die Abgasrückführung beim Vollastbetrieb des Verbrennungsmotors erfolgt.

15. Verbrennungsmotor nach einem der Ansprüche 10 bis 14, wobei der Betrieb des Verbrennungsmotors weiterhin so gesteuert ist, dass die Abgasrückführung nach Abschluss eines Startvorgangs des Verbrennungsmotors bei jedem Betriebszustand des Verbrennungsmotors erfolgt.
